# FASCICULE DE BREVET EUROPEEN

(11) **EP 1 077 588 B1**
(45) Date de publication et mention de la délivrance du brevet: **05.07.2006**
(21) Numéro de dépôt: 00420174.5
(22) Date de dépôt: 04.08.2000
(51) Int. Cl.: H05B 7/14, H05B 7/107

(54) **Dispositif de montage d'électrode composite à auto-cuisson pour four électrique à arc**
Selbstbackende Verbundelektroden-Anordnung bestimmt für Lichtbogenofen
Self-baking composite electrode assembly for electric arc furnace

(30) Priorité: 19.08.1999 FR 9910706
(43) Date de publication de la demande: 21.02.2001
(73) Titulaire: Invensil, 73000 Chambery (FR)
(72) Inventeur: Delorme, Raymond, 73100 Mouxy (FR)
(74) Mandataire: Maureau, Philippe

(56) Documents cités:
- EP-A- 0 229 968
- EP-A- 0 559 390
- US-A- 4 575 856
- US-A- 5 577 065

## Description

### Domaine de l'invention

L'invention concerne une électrode à auto-cuisson, ou électrode Sôderberg, destinée à un four électrique à arc, notamment un four de fabrication de silicium métallurgique, constituée d'une colonne centrale formée d'une succession d'électrodes précuites en carbone ou en graphite, d'une virole métallique extérieure et de pâte carbonée en cours de cuisson entre la colonne centrale et la virole

### Etat de la technique

Le principe de l'électrode à auto-cuisson est connu depuis 1917 par un brevet déposé par Det Norske Aktieleskap for Elektrokemisk Industri (FR 488778) et son inventeur C.W. Sôderberg lui a laissé son nom. L'électrode est cuite dans le four électrique lui-même à partir d'une pâte carbonée alimentée en continu à l'intérieur d'une virole en acier comportant des ailettes pour soutenir l'électrode. Cette technique fait que le bas de la virole se dissout dans le bain de métal fondu et y introduit du fer, ce qui peut être gênant, en particulier dans le cas du silicium.
Pour éviter la contamination par le fer, plusieurs solutions ont été proposées, qui toutes consistent à désolidariser mécaniquement l'électrode et la virole, de sorte que l'électrode puisse être glissée sans la virole. Il suffit d'utiliser une virole lisse sans ailettes, mais il faut alors prévoir un montage mécanique permettant de supporter autrement le poids de l'électrode. Ce montage est généralement une pièce insérée dans la pâte en cours de cuisson, qui se consomme en même temps que l'électrode, par exemple une bande d'acier perforée comme dans le brevet IT 606568 déposé en 1959 par la société Edison, ou une colonne formant une électrode précuite en carbone ou graphite, constituée d'éléments assemblés au moyen de nipples comme dans le brevet US 4575856 de J.A. Persson déposé en 1984. Le brevet FR 2683421, déposé par la société Carburos Metallicos décrit diverses adaptations de cette technique. Le brevet FR 2724219 de Pechiney Electrométallurgie propose de suspendre la colonne centrale à un support mobile dans le sens vertical sur une longueur supérieure à celle de chacun des éléments unitaires constituant la colonne centrale.
L'invention a pour but de perfectionner ce dernier dispositif de manière à apporter une plus grande sécurité et une fiabilité accrue dans le fonctionnement de l'électrode, en améliorant l'assemblage des éléments constituant la colonne centrale.

### Objet de l'invention

L'invention a pour objet un dispositif de montage d'une électrode composite à auto-cuisson pour four électrique à arc, cette électrode comportant une virole extérieure métallique, une colonne centrale en carbone précuit ou graphite constituée d'une pluralité d'éléments assemblés par des nipples et de la pâte carbonée disposée entre la virole et la colonne centrale, ce dispositif comportant un support mobile dans le sens vertical sur une longueur supérieure à chacun des éléments et servant à suspendre la colonne centrale, et un dispositif de blocage temporaire de la colonne, caractérisé en ce qu'il est équipé d'un mécanisme permettant, en coopération avec le dispositif de blocage temporaire de la colonne, d'exercer un couple de serrage de valeur prédéterminée entre un nouvel élément et la colonne centrale sur laquelle ce nouvel élément vient se visser.

### Description de l'invention

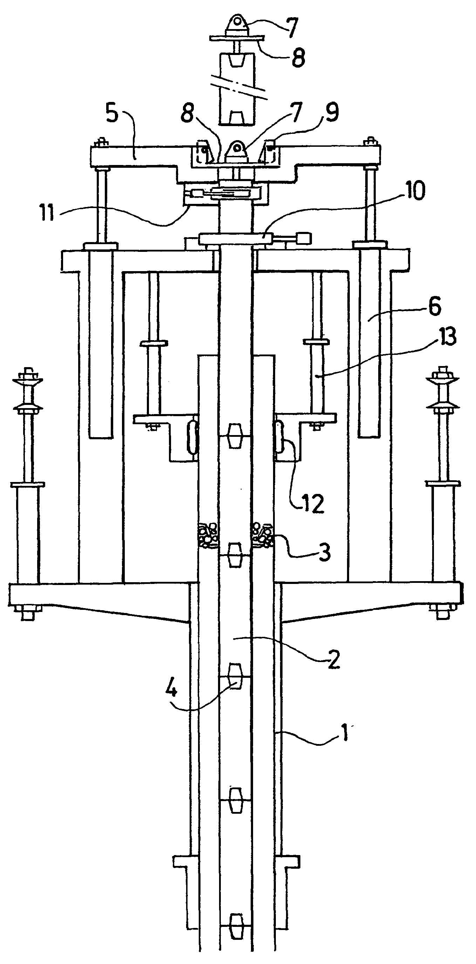

L'invention sera décrite en se référant à la figure unique qui représente, en coupe axiale, un exemple de réalisation d'un dispositif de montage d'électrode composite.
Comme décrit dans le brevet FR 2724219, l'électrode proprement dite comporte une virole métallique cylindrique (1), une colonne centrale (2) et, dans l'espace compris entre la virole et la colonne centrale, de la pâte carbonée (3) introduite par le sommet qui cuit progressivement au fur et à mesure de sa progression vers le bas. La colonne centrale (2), cylindrique et de même axe que la virole, est constituée d'éléments, généralement identiques, en carbone précuit ou en graphite, munis à leurs deux extrémités de trous coniques filetés et assemblés les uns aux autres par des nipples (4), c'est-à-dire des raccords à double filetage conique réalisés dans le même matériau et vissés sur les deux éléments à assembler. Le dispositif de montage comporte un support (5) mobile verticalement par rapport à la virole (1) à l'aide de deux vérins (6), dont la course est supérieure à la longueur des éléments formant la colonne (2). L'élément supérieur de la colonne centrale est fixé au support mobile (5) à l'aide d'une pièce métallique (7) reproduisant à son extrémité le filetage des nipples (4). Lorsque, suite aux glissements successifs nécessaires pour compenser la consommation continue de l'électrode, les vérins (6) arrivent en fin de course, on bloque momentanément la colonne (2) en la soutenant par le dispositif de blocage temporaire (10), le temps de sortir la pièce de fixation (7), de faire remonter les vérins (6) vers le haut et d'ajouter un nouvel élément au sommet de la colonne (2).
Dans le dispositif correspondant au brevet FR 2724219, ce nouvel élément était vissé manuellement ou à l'aide d'une clef dynamométrique sur l'élément situé juste au dessous. En cas de serrage insuffisant, la colonne risquait d'être mal supportée et l'assemblage de se desserrer ; en cas de serrage trop fort au contraire, le filetage de l'élément pouvait se détériorer.
Dans le montage perfectionné de la présente invention, lorsqu'il est nécessaire d'ajouter un nouvel élément au sommet de la colonne, la pièce (7), munie d'une collerette (8), est enlevée, un nouvel élément muni à son extrémité supérieure d'une nouvelle pièce (7) descend au dessus de la colonne (2) à l'aide d'un treuil. Lorsque la collerette (8) de la pièce (7) arrive sur le support (5), le nouvel élément s'encliquette par son propre poids à travers les pièces pivotantes (9) et se trouve ainsi correctement positionné juste au dessus de la colonne (2). Le couple de serrage entre le nouvel élément et la colonne (2) est assuré par le dispositif de blocage (10) et le mécanisme de serrage (11), qui permettent de fournir un couple de serrage parfaitement défini en contrôlant la pression de l'huile du vérin hydraulique commandant le mécanisme (11). Le glissement de l'électrode est contrôlé au moyen des vérins (6), la manoeuvre étant effectuée avec serrage de la virole par la ceinture (12), de manière à retenir la virole (1) pendant le glissement. Compte tenu de la nécessité d'allonger la virole de temps à autre, on effectue, pour ce faire, la même manoeuvre que précédemment, mais en glissant alors simultanément la virole (1) au moyen des vérins (13) et l'électrode au moyen des vérins (6). Le positionnement de l'électrode dans le four, commandé par la régulation électrique du four, se fait de manière identique à ce qui est décrit dans le brevet FR 2724219.
Le dispositif selon l'invention permet d'effectuer l'addition de nouveaux éléments à la colonne (2) en réduisant considérablement le risque de rupture de cette colonne, et donc le taux d'arrêt des fours, qui est réduit de 75% en passant de 2% à 0,5%. Par ailleurs, cette sécurité accrue permet de réduire de l'ordre de 10% le diamètre de la colonne (2) par rapport à la technique antérieure, ce qui réduit les coûts, la pâte Sôderberg étant beaucoup moins coûteuse que les électrodes précuites.

## Revendications

1. Dispositif de montage d'une électrode composite à auto-cuisson pour four électrique à arc, cette électrode comportant une virole extérieure métallique (1), une colonne centrale (2) en carbone précuit ou graphite constituée d'une pluralité d'éléments assemblés par des nipples (4) et de la pâte carbonée (3) disposée entre la virole (1) et la colonne centrale (2), ce dispositif comportant un support (5) mobile dans le sens vertical sur une longueur supérieure à chacun des éléments et servant à suspendre la colonne centrale (2), et un dispositif de blocage temporaire (10) de la colonne (2), **caractérisé en ce qu'**il est équipé d'un mécanisme de serrage (11) permettant, en coopération avec le dispositif de blocage temporaire (10) de la colonne (2), d'exercer un couple de serrage de valeur prédéterminée entre un nouvel élément et la colonne centrale (2) sur laquelle ce nouvel élément vient se visser.

2. Dispositif selon la revendication 1, **caractérisé en ce que** la colonne centrale (2) est fixée au support (5) à l'aide d'une pièce (7) comportant des moyens pour s'encliqueter sur le support (5).

3. Dispositif selon l'une des revendications 1 ou 2, **caractérisé en ce qu'**il comporte un dispositif (10) de blocage temporaire de la descente de la colonne centrale (2)

4. Utilisation d'un dispositif selon l'une des revendications 1 à 3 dans un four électrique à arc pour la production de silicium métallurgique.

## Claims

1. Device for fitting a self-firing composite electrode for an electric arc furnace, this electrode comprising an outer metal ferrule (1), a graphite or pre-fired carbon central column (2) consisting of a plurality of elements formed by nipples (4) and paste containing carbon (3) which is disposed between the ferrule (1) and the central column (2), this device comprising a support (5) which is mobile in the vertical direction along a length which is greater than each of the elements, and is used to suspend the central column (2), and a device (10) for temporary stopping of the column (2), **characterised in that** it is equipped with a clamping mechanism (11) which, in co-operation with the device (10) for temporary stopping of the column (2), makes it possible to apply a clamping moment with a predetermined value between a new element and the central column (2) onto which this new element is screwed.

2. Device according to claim 1, **characterised in that** the central column (2) is secured to the support (5) by means of a part (7) comprising means for snapping onto the support (5).

3. Device according to claim 1 or claim 2, **characterised in that** it comprises a device (10) for temporary stopping of the descent of the central column (2).

4. Use of a device according to any one of claims 1 to 3 in an electric arc furnace for the production of metallurgic silicon.

## Patentansprüche

1. Vorrichtung zur Montage einer selbstbackenden Verbundelektrode für Elektrolichtbogenofen, wobei diese Elektrode einen äußeren metallischen Mantelschuss (1), eine zentrale Säule (2) aus vorgebackenem Kohlenstoff oder Graphit, die aus einer Vielzahl von Elementen besteht, die durch Nippel (4) und Kohlenstoffpaste (3), die zwischen dem Mantelschuss (1) und der zentralen Säule (2) angeordnet ist, zusammengefügt sind, umfasst, wobei diese Vorrichtung einen Träger (5) aufweist, der in die vertikale Richtung über eine Länge beweglich ist, die größer ist als jedes der Elemente, und die dazu dient, die zentrale Säule (2) aufzuhängen, sowie eine Vorrichtung zum vorübergehenden Blockieren (10) der Säule (2), **dadurch gekennzeichnet, dass** sie mit einem Spannmechanismus (11) versehen ist, der es in Zusammenarbeit mit der Vorrichtung zum vorübergehenden Blockieren (10) der Säule (2) erlaubt, ein Spannmoment mit einem vorausbestimmten wert zwischen einem neuen Element und der zentralen Säule (2), auf die das neue Element geschraubt wird, auszuüben.

2. Vorrichtung nach Anspruch 1, **dadurch gekennzeichnet, dass** die zentrale Säule (2) an dem Träger (5) mit Hilfe eines Teils (7), das Mittel umfasst, um auf dem Träger (5) einzurasten, befestigt ist.

3. Vorrichtung nach einem der Ansprüche 1 oder 2, **dadurch gekennzeichnet, dass** sie eine Vorrichtung zum vorübergehenden Blockieren (10) des Senkens der zentralen Säule (2) aufweist.

4. Verwendung einer Vorrichtung nach einem der Ansprüche 1 bis 3 in einem Elektrolichtbogenofen zum Herstellen von metallurgischem Silizium.
